(19) Europäisches Patentamt / European Patent Office / Office européen des brevets

(11) **EP 4 640 511 A1**

(12) **EUROPEAN PATENT APPLICATION**

(43) Date of publication:
29.10.2025 Bulletin 2025/44

(21) Application number: 25166271.4

(22) Date of filing: 26.03.2025

(51) International Patent Classification (IPC):
**B60W 40/13** (2012.01) **G01G 19/08** (2006.01)

(52) Cooperative Patent Classification (CPC):
**B60W 40/13; G01G 19/086**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.04.2024 JP 2024072561

(71) Applicant: SUMITOMO RUBBER INDUSTRIES, LTD.
Kobe-shi, Hyogo 651-0072 (JP)

(72) Inventors:
• **NARITA, Shuhei**
Chuo-ku, Kobe-shi, Hyogo, 651-0072 (JP)
• **URABE, Tomoyuki**
Chuo-ku, Kobe-shi, Hyogo, 651-0072 (JP)
• **KAWASAKI, Yuzo**
Chuo-ku, Kobe-shi, Hyogo, 651-0072 (JP)

(74) Representative: **TBK**
Bavariaring 4-6
80336 München (DE)

(54) **WHEEL LOAD ESTIMATION DEVICE, WHEEL LOAD ESTIMATION METHOD, AND WHEEL LOAD ESTIMATION PROGRAM**

(57) A wheel load estimation device includes a tire information acquisition unit, a wheel speed acquisition unit, a frequency characteristic ratio calculation unit, a load ratio calculation unit, and a wheel load calculation unit. The tire information acquisition unit acquires type information specifying a type of a tire. The wheel speed acquisition unit acquires wheel speed information representing a wheel speed of each wheel of a vehicle. The frequency characteristic ratio calculation unit calculates front-rear and left-right frequency characteristic ratios. The load ratio calculation unit calculates front-rear and left-right load ratios. The wheel load calculation unit calculates a wheel load ratio representing a relative wheel load. The load ratio calculation unit calculates the front-rear and left-right load ratios, based on first relationship specification information and second relationship specification information, respectively. The first relationship specification information and the second relationship specification information are determined according to the type of the tire.

FIG. 3

EP 4 640 511 A1

## Description

BACKGROUND OF THE INVENTION

Field of the Invention

The present invention relates to a technology for estimating a wheel load of a tire included in a vehicle.

Background Art

Japanese Laid-Open Patent Publication No. 2019-113373 discloses a wheel load estimation device that can accurately estimate a wheel load with simple equipment. The wheel load estimation device estimates the load ratio of each wheel by utilizing the fact that the frequency characteristics of a rotating wheel change in accordance with a change in the wheel load. More specifically, in Japanese Laid-Open Patent Publication No. 2019-113373, integrated gain values of frequency spectra are derived for two front wheels, two rear wheels, two left wheels, and two right wheels, respectively, from output signals of wheel speed sensors for detecting the wheel speeds of the respective wheels. According to Japanese Laid-Open Patent Publication No. 2019-113373, the front-rear ratio and the left-right ratio of these integrated gain values are in an approximately linear relationship with the front-rear ratio and the left-right ratio of the wheel loads, respectively. Therefore, if coefficients that specify the above linear relationship are obtained in advance, the load ratio of each wheel is estimated based on the integrated gain values derived based on the output signals of the wheel speed sensors for the respective wheels. Furthermore, if the total weight of the vehicle body is separately estimated, the wheel load of each wheel can be estimated.

However, the frequency characteristics of each wheel speed vary depending on the type of the tire. Therefore, depending on the tires included in the vehicle, the linear relationship between the front-rear ratio of the integrated gain values and the front-rear ratio of the wheel loads may deviate from the above pre-specified linear relationship, which may reduce the accuracy of the wheel load estimation. The same applies to the linear relationship between the left-right ratio of the integrated gain values and the left-right ratio of the wheel loads.

An object of the present invention is to provide a wheel load estimation device, a wheel load estimation method, and a wheel load estimation program that can accurately estimate a wheel load.

SUMMARY OF THE INVENTION

A wheel load estimation device according to a first aspect of the present invention is a wheel load estimation device configured to estimate a wheel load of a tire included in a vehicle. The wheel load estimation device includes a tire information acquisition unit, a wheel speed acquisition unit, a frequency characteristic ratio calculation unit, a load ratio calculation unit, and a wheel load calculation unit. The tire information acquisition unit acquires type information specifying a type of the tire. The wheel speed acquisition unit acquires wheel speed information representing a wheel speed of each wheel of the vehicle. The frequency characteristic ratio calculation unit calculates a front-rear frequency characteristic ratio and a left-right frequency characteristic ratio, based on the wheel speed information, the front-rear frequency characteristic ratio changing in accordance with a change in a front-rear load ratio which is a ratio between a load applied to a front wheel of the vehicle and a load applied to a rear wheel of the vehicle, the left-right frequency characteristic ratio changing in accordance with a change in a left-right load ratio which is a ratio between a load applied to a left wheel of the vehicle and a load applied to a right wheel of the vehicle. The load ratio calculation unit calculates the front-rear load ratio and the left-right load ratio, based on the front-rear frequency characteristic ratio and the left-right frequency characteristic ratio, respectively. The wheel load calculation unit calculates a wheel load ratio representing a relative wheel load between the wheels included in the vehicle, with respect to at least one wheel of the vehicle, based on the front-rear load ratio and the left-right load ratio. The load ratio calculation unit calculates the front-rear load ratio and the left-right load ratio, based on first relationship specification information specifying a relationship between the front-rear frequency characteristic ratio and the front-rear load ratio and second relationship specification information specifying a relationship between the left-right frequency characteristic ratio and the left-right load ratio, respectively. The first relationship specification information and the second relationship specification information are determined according to the type of the tire.

A wheel load estimation device according to a second aspect is the wheel load estimation device according to the first aspect, wherein at least one of the tires includes a tag in which the type information is electromagnetically stored.

A wheel load estimation device according to a third aspect is the wheel load estimation device according to the first or second aspect, wherein the first relationship specification information and the second relationship specification information are stored in a computer external to the vehicle, and the load ratio calculation unit acquires the first relationship specification information and the second relationship specification information from the external computer.

A wheel load estimation system according to a fourth aspect includes: the wheel load estimation device according to the first aspect; at least one tire including a tag in which the type information is electromagnetically stored; and a reader configured to read out the type information from the tag.

A wheel load estimation method according to a fifth aspect is a wheel load estimation method, executed by one or more computers, for estimating a wheel load of a tire included in a vehicle, and includes the following.

· Acquiring type information specifying a type of the tire.

· Acquiring wheel speed information representing a wheel speed of each wheel of the vehicle.

· Calculating a front-rear frequency characteristic ratio and a left-right frequency characteristic ratio, based on the wheel speed information, the front-rear frequency characteristic ratio changing in accordance with a change in a front-rear load ratio which is a ratio between a load applied to a front wheel of the vehicle and a load applied to a rear wheel of the vehicle, the left-right frequency characteristic ratio changing in accordance with a change in a left-right load ratio which is a ratio between a load applied to a left wheel of the vehicle and a load applied to a right wheel of the vehicle.

· Calculating the front-rear load ratio and the left-right load ratio, based on the front-rear frequency characteristic ratio and the left-right frequency characteristic ratio, respectively.

· Calculating a wheel load ratio representing a relative wheel load between the wheels included in the vehicle, with respect to at least one wheel of the vehicle, based on the front-rear load ratio and the left-right load ratio.

· The calculating the front-rear load ratio and the left-right load ratio includes calculating the front-rear load ratio and the left-right load ratio, based on first relationship specification information specifying a relationship between the front-rear frequency characteristic ratio and the front-rear load ratio and second relationship specification information specifying a relationship between the left-right frequency characteristic ratio and the left-right load ratio, respectively, and the first relationship specification information and the second relationship specification information are determined according to the type of the tire.

A wheel load estimation program according to a sixth aspect is a wheel load estimation program for estimating a wheel load of a tire included in a vehicle, and causes one or more computers to execute the following.

· Acquiring type information specifying a type of the tire.

· Acquiring wheel speed information representing a wheel speed of each wheel of the vehicle.

· Calculating a front-rear frequency characteristic ratio and a left-right frequency characteristic ratio, based on the wheel speed information, the front-rear frequency characteristic ratio changing in accordance with a change in a front-rear load ratio which is a ratio between a load applied to a front wheel of the vehicle and a load applied to a rear wheel of the vehicle, the left-right frequency characteristic ratio changing in accordance with a change in a left-right load ratio which is a ratio between a load applied to a left wheel of the vehicle and a load applied to a right wheel of the vehicle.

· Calculating the front-rear load ratio and the left-right load ratio, based on the front-rear frequency characteristic ratio and the left-right frequency characteristic ratio, respectively.

· Calculating a wheel load ratio representing a relative wheel load between the wheels included in the vehicle, with respect to at least one wheel of the vehicle, based on the front-rear load ratio and the left-right load ratio.

· The calculating the front-rear load ratio and the left-right load ratio includes calculating the front-rear load ratio and the left-right load ratio, based on first relationship specification information specifying a relationship between the front-rear frequency characteristic ratio and the front-rear load ratio and second relationship specification information specifying a relationship between the left-right frequency characteristic ratio and the left-right load ratio, respectively, and the first relationship specification information and the second relationship specification information are determined according to the type of the tire.

According to the present invention, it is possible to more accurately estimate the wheel load of the tire included in the vehicle.

BRIEF DESCRIPTION OF THE DRAWINGS

FIG. 1 is a schematic diagram showing a situation in which a wheel load estimation device according to one embodiment of the present invention is installed in a vehicle;
FIG. 2 is a block diagram showing the electrical configuration of the wheel load estimation device;
FIG. 3 is a flowchart showing the flow of wheel load estimation processing;
FIG. 4 is a schematic diagram of a wheel load estimation system according to a modification; and
FIG. 5 is a diagram of a configuration example of a database.

DETAILED DESCRIPTION

Hereinafter, a wheel load estimation device, a wheel load estimation method, and a wheel load estimation program according to an embodiment of the present invention will be described with reference to the drawings.

<1. Configuration of Wheel Load Estimation Device>

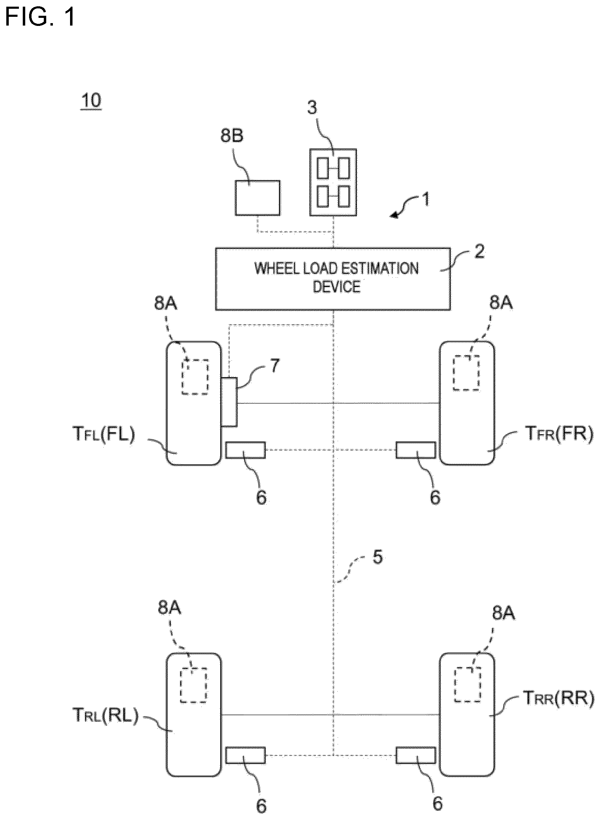

FIG. 1 is a schematic diagram showing a situation in which a wheel load estimation device 2 according to the present embodiment is installed in a vehicle 1. The vehicle 1 is a four-wheel vehicle, and includes a front-left wheel FL, a front-right wheel FR, a rear-left wheel RL, and a rear-right wheel RR. Tires $T_{FL}$, $T_{FR}$, $T_{RL}$, and $T_{RR}$ are mounted on the wheels FL, FR, RL, and RR, respectively. The wheel load estimation device 2 has a function of estimating wheel loads applied to these wheels FL, FR, RL, and RR (or tires $T_{FL}$, $T_{FR}$, $T_{RL}$, and $T_{RR}$).

Data on the estimated wheel loads is utilized for various controls for assisting the vehicle 1 in running. For example, the data on the estimated wheel loads is transmitted to a brake control system, and is utilized for brake control. In addition, the data on the estimated wheel loads is transmitted to a tire pressure monitoring system (TPMS) or the like mounted on the wheels FL, FR, RL, and RR, and is utilized for determining deflation of each tire. In the TPMS, if deflation of a tire is detected based on the data on the estimated wheel loads, a warning about the detection can be issued via a warning indicator 3 installed in the vehicle 1. For the TPMS, there is a method for determining deflation of a tire based on a change in the dynamic load radius of the tire, and the dynamic load radius of the tire is influenced not only by deflation of the tire but also by the wheel load. Therefore, if this method is adopted, the influence of the wheel load is cancelled out of the dynamic load radius of the tire based on the data on the estimated wheel loads, whereby deflation of the tire can be accurately determined. Overloading or unbalanced loading for the vehicle 1 can also be detected based on the data on the estimated wheel loads, and if this is detected, a warning about the detection can be issued via the warning display 3 installed in the vehicle 1. Overloading means a state where loads that exceed an allowable load capacity are placed on the vehicle 1, and unbalanced loading means a state where loads are unbalanced in the vehicle 1.

At least one of the tires $T_{FL}$, $T_{FR}$, $T_{RL}$, and $T_{RR}$ of the present embodiment includes a tag 8A in which type information specifying the type of the tire is electromagnetically stored. More specifically, the tag 8A is composed of a known RFID tag having a built-in memory for storing information, for example, and is embedded in the rubber constituting the tire $T_{FL}$, $T_{FR}$, $T_{RL}$, or $T_{RR}$. The type information specifying the type of the tire may be information by which the tire name and the tire size of the tire can be specified. In addition, individual identification information identifying the individual tire, specification information indicating the specifications other than the size of the tire, production information regarding production such as the production date, etc., may be stored in the memory of the tag 8A.

The information stored in the memory in the tag 8A can be read out in a noncontact manner by a reader 8B in the present embodiment. The reader 8B is, for example, a device installed in the vehicle 1 and connected to the wheel load estimation device 2 so as to enable data communication. The reader 8B sends a request signal for requesting the tag 8A to transmit the type information, to the tag 8A. In response to the request signal, the tag 8A transmits the type information stored in the memory, to the reader 8B. Upon receiving the type information, the reader 8B notifies the wheel load estimation device 2 of the type information. Thus, the reader 8B can be composed of a known RFID reader or a known RFID reader/writer. The reader 8B and at least one tire including the tag 8A constitute a wheel load estimation system 10 according to the present embodiment, together with the wheel load estimation device 2.

In the present embodiment, the wheel loads of the tires $T_{FL}$, $T_{FR}$, $T_{RL}$, and $T_{RR}$ are estimated based on the wheel speeds (rotation speeds) of the wheels FL, FR, RL, and RR. The wheels FL, FR, RL, and RR are each equipped with a wheel speed sensor 6, and the wheel speed sensor 6 detects, at a predetermined sampling period $\Delta T$, information representing the wheel speed of the wheel (hereinafter referred to as wheel speed information) on which the wheel speed sensor 6 is mounted. The wheel speed sensor 6 is connected to the wheel load estimation device 2 via a communication line 5, and the wheel speed information detected by each wheel speed sensor 6 is transmitted to the wheel load estimation device 2 in real time.

As the wheel speed sensor 6, any sensor can be used as long as the sensor can detect the wheel speed of the wheel FL, FR, RL, or RR during running. For example, a sensor of a type that measures the wheel speed from an output signal of an electromagnetic pickup can be used, or a sensor of a type that generates power by using rotation, like a dynamo, and measures the wheel speed from the voltage at that time, can also be used. The mounting position of the wheel speed sensor 6 is also not particularly limited, and any position can be selected as appropriate according to the type of the sensor as long as it is possible to detect the wheel speed.

In the present embodiment, the current total weight of the vehicle 1 is estimated based on a wheel torque WT of the vehicle 1. In the present embodiment, the front-left wheel which is one drive wheel is equipped with a wheel torque sensor (hereinafter referred to as WT sensor) 7. The WT sensor 7 detects the wheel torque of the vehicle 1. The WT sensor 7 is connected to the wheel load estimation device 2 via the communication line 5, and information on the wheel torque detected by the WT sensor 7 is transmitted to the wheel load estimation device 2 in real time.

As for the WT sensor 7, as long as the wheel torque of a drive wheel of the vehicle 1 can be detected, neither the structure nor the mounting position thereof is particularly limited. Various types of WT sensors are commercially available, and the configurations thereof are well known, so that the detailed description thereof is omitted here. It is also possible to detect wheel torque without using the WT sensor 7, and, for example, wheel torque can also be estimated from engine torque acquired from a control device for an engine.

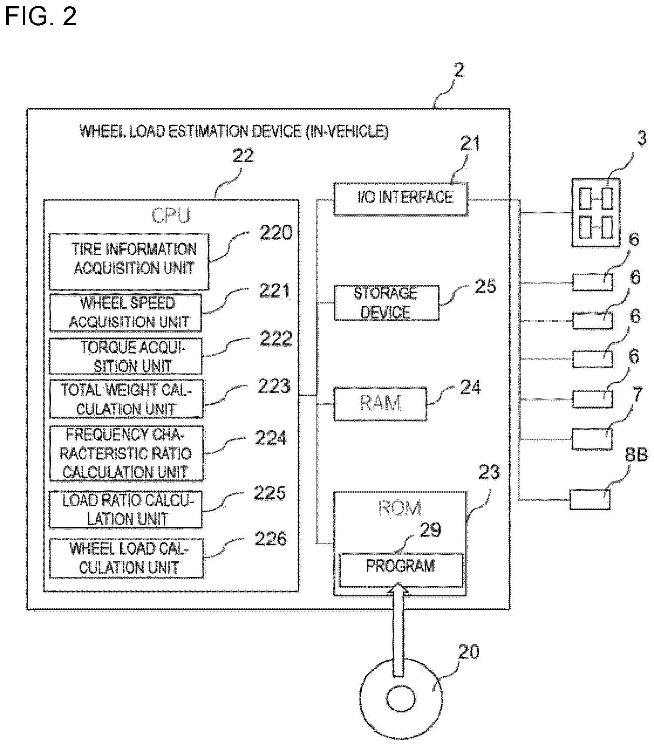

FIG. 2 is a block diagram showing the electrical configuration of the wheel load estimation device 2. As shown in FIG. 2, the wheel load estimation device 2 is an in-vehicle computer installed in the vehicle 1, and includes an I/O interface 21, a CPU (central processing unit) 22, a ROM (read only memory) 23, a RAM (random access memory) 24, and a nonvolatile rewritable storage device 25. The I/O interface 21 is a communication device for performing communication with external devices such as the wheel speed sensor 6, the WT sensor 7, and the warning indicator 3 described later. A program 29 for controlling the operation of each component of the vehicle 1 is stored in the ROM 23. The program 29 is written from a storage medium 20 such as a CD-ROM to the ROM 23. The CPU 22 reads out the program 29 from the ROM 23 and executes the program 29, thereby virtually operating as a tire information acquisition unit 220, a wheel speed acquisition unit 221, a torque acquisition unit 222, a total weight calculation unit 223, a frequency characteristic ratio calculation unit 224, a load ratio calculation unit 225, and a wheel load calculation unit 226. The details of the operations of the units 220 to 226 will be described later. The storage device 25 is composed of a hard disk, a flash memory, or the like. The storage place of the program 29 does not have to be the ROM 23, and may be the storage device 25. The RAM 24 and the storage device 25 are used as appropriate for the arithmetic operations of the CPU 22.

First relationship specification information and second relationship specification information for multiple types of tires that may be mounted on the wheels FL, FR, RL, and RR are stored in advance in the storage device 25 or the ROM 23 of the present embodiment. The first relationship specification information and the second relationship specification information are information that is referenced by the wheel load estimation device 2 in wheel load estimation processing described later. The first relationship specification information and the second relationship specification information are specified in advance for each type of tire, based on data acquired in test runs conducted with a test vehicle of the same type as the vehicle 1 with different types of tires mounted on the wheels and different wheel load conditions for each tire, for example.

The warning indicator 3 can be realized in any form such as a liquid crystal display element or a liquid crystal monitor, as long as occurrence of unbalanced loading on the tires or the like can be notified to a user. The mounting position of the warning indicator 3 can also be selected as appropriate, but the warning indicator 3 is preferably provided, for example, at a position, such as on an instrument panel, that is easily recognized by a driver. In the case where the wheel load estimation device 2 is connected to a car navigation system, a monitor for car navigation can also be used as the warning indicator 3. In the case where a monitor is used as the warning indicator 3, a warning can be displayed on the monitor as an icon or text information.

<2. Wheel Load Estimation Processing>

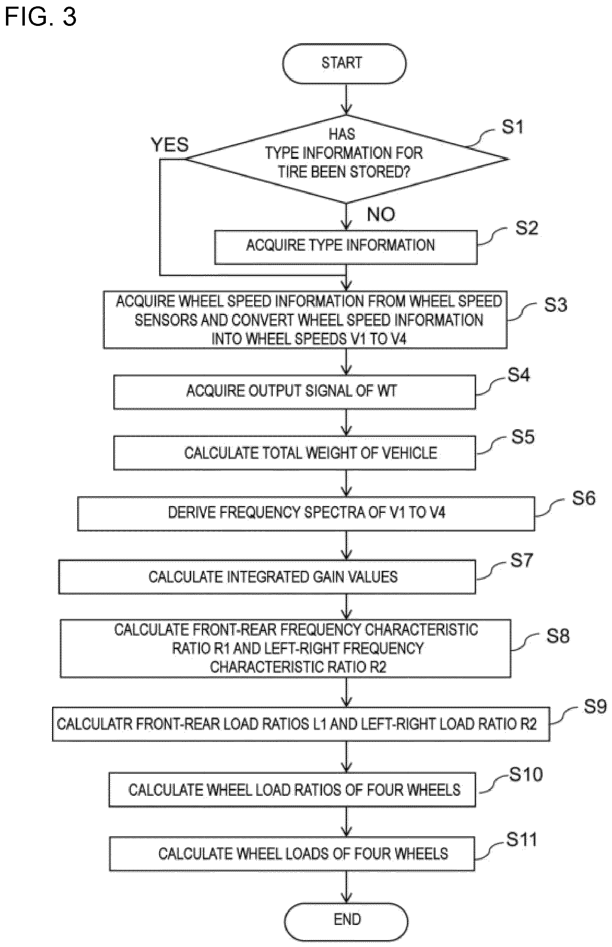

FIG. 3 is a flowchart showing the flow of the wheel load estimation processing. Hereinafter, the wheel load estimation processing for estimating the wheel loads of the tires $T_{FL}$, $T_{FR}$, $T_{RL}$, and $T_{RR}$ will be described with reference to FIG. 3. The wheel load estimation processing shown in FIG. 3 starts when the vehicle 1 starts running, and stops when the vehicle 1 stops running, for example.

First, the tire information acquisition unit 220 determines whether or not at least one piece of the type information for the tires $T_{FL}$, $T_{FR}$, $T_{RL}$, and $T_{RR}$ currently mounted on the wheels FL, FR, RL, and RR has already been stored in the storage device 25 (step S1). If it is determined that the at least one piece of the type information has already been stored in the storage device 25 (YES), step S3 is executed next. If it is determined that none of the type information for the tires $T_{FL}$, $T_{FR}$, $T_{RL}$, and $T_{RR}$ has been stored in the storage device 25 (NO), step S2 is executed next.

In step S2, the tire information acquisition unit 220 acquires the at least one piece of the tire type information for the tires $T_{FL}$, $T_{FR}$, $T_{RL}$, and $T_{RR}$, which is stored in the tag 8A, via the reader 8B. The tire information acquisition unit 220 requests the reader 8B to transmit a request signal to the tag 8A and to forward the type information received from the tag 8A. Accordingly, the tire information acquisition unit 220 acquires the at least one piece of the type information for the tires $T_{FL}$, $T_{FR}$, $T_{RL}$, and $T_{RR}$, and stores the at least one piece of the type information in the storage device 25. The above request to the reader 8B may be executed as a trigger for the user (typically, the driver of the vehicle 1) to perform an operation on the wheel load estimation device 2. In this case, the tire information acquisition unit 220 may generate a screen promoting the user to perform a predetermined initialization operation (e.g., pressing a predetermined button, or the like) and display the screen on the warning indicator 3. In the present embodiment, once the type information is stored in the storage device 25, the same type information is referenced in subsequent wheel load estimation processing. Therefore, it is preferable that the wheel load estimation device 2 is configured to be able to overwrite and update the type information as appropriate when the user performs the above initialization operation after tire replacement or the like.

In step S3, the wheel speed acquisition unit 221 acquires time-series rotation speed signals from the respective wheel speed sensors 6 mounted on the wheels FL, FR, RL, and RR. The wheel speed acquisition unit 221 converts the acquired rotation speed signals into rotation speeds V1 to V4 of the wheels FL, FR, RL, and RR (or the tires $T_{FL}$, $T_{FR}$, $T_{RL}$, and $T_{RR}$), respectively, and temporarily stores the rotation speeds V1 to V4 in the RAM 24 or stores the rotation speeds V1 to V4 in the storage device 25.

Subsequently, the torque acquisition unit 222 acquires an output signal from the WT sensor 7 (step S4). The torque acquisition unit 222 temporarily stores the acquired output signal of the WT sensor 7 in the RAM 24, or stores the acquired output signal of the WT sensor 7 in the storage device 25. In addition, the torque acquisition unit 222 converts the output signal of the WT sensor 7 into a wheel torque.

Subsequently, the total weight calculation unit 223 calculates a current total weight M of the vehicle 1 (step S5). In the present embodiment, the total weight M is calculated based on the following equation of motion. In the following equation, WT denotes the wheel torque derived in step S3. $\alpha$ denotes the front-rear acceleration of the vehicle 1 and is calculated from the wheel speeds V1 to V4. g denotes the gravitational acceleration, and $\theta$ denotes a road surface inclination. $\theta$ can be calculated, for example, from data from a satellite positioning system such as GPS installed in the vehicle 1.

$$ WT = M\alpha + Mg \cdot \sin\theta $$

Various methods are known as a method for estimating the total weight M of the vehicle 1, and thus the detailed description thereof is omitted here, but for better understanding, for example, Japanese Patent No. 5346659 and Japanese Patent No. 4926258 of this applicant, etc., may be referenced.

Subsequently, the frequency characteristic ratio calculation unit 224 evaluates the frequency characteristics of waveform signals of the wheel speeds V1 to V4 (step S6). Specifically, the frequency characteristic ratio calculation unit 224 differentiates time-series data of the wheel speeds V1 to V4 over time to calculate accelerations A1 to A4, respectively. The accelerations A1 to A4 are the rotational accelerations of the wheels FL, FR, RL, and RR, respectively. Subsequently, the frequency characteristic ratio calculation unit 224 performs a fast Fourier transform on the accelerations A1 to A4 to derive frequency spectra, respectively. The frequency characteristics can also be evaluated through time-series estimation with an autoregressive model, distribution of the time-series data, or the like, in addition to the fast Fourier transform processing.

Subsequently, the frequency characteristic ratio calculation unit 224 calculates integrated gain values for the two front wheels (FL+FR), the two rear wheels (RL+RR), the two left wheels (FL+RL), and the two right wheels (FR+RR) based on the frequency spectra of the wheels FL, FR, RL, and RR derived in step S6 (step S7). As described above, the integrated gain value represents the magnitude of the gain. In the present embodiment, when calculating the integrated gain value, the frequency spectrum is integrated in a band from zero to the Nyquist frequency, but the integration may be performed in a limited band in which the influence of a load is significantly exhibited. In addition, the integration intervals for the front, rear, left, and right wheels do not necessarily have to be the same. Hereinafter, the integrated gain values of the two front wheels, the two rear wheels, the two left wheels, and the two right wheels are referred to as front wheel gain, rear wheel gain, left wheel gain, and right wheel gain, respectively.

Subsequently, the load ratio calculation unit 225 calculates a front-rear frequency characteristic ratio R1 and a left-right frequency characteristic ratio R2 according to the following equations (step S8).

$$ R1 = \text{rear wheel gain/front wheel gain} $$

$$ R2 = \text{right wheel gain/left wheel gain} $$

Subsequently, the load ratio calculation unit 225 calculates a front-rear load ratio L1 and a left-right load ratio L2 (step S9). More specifically, the load ratio calculation unit 225 reads out the first relationship specification information and the second relationship specification information from the storage device 25, based on the type information stored in the storage device 25. In the present embodiment, L1 and L2 are calculated from R1 and R2, respectively, utilizing the fact that L1 and R1 are in an approximately linear relationship and L2 and R2 are in an approximately linear relationship as disclosed in Japanese Laid-Open Patent Publication No. 2019-113373. Therefore, the first relationship specification information is constants c1 and d1 which specify the linear relationship between L1 and R1 as in the following equation, and the second relationship specification information is constants c2 and d2 which specify the linear relationship between L2 and R2 as in the following equation.

$$ L1 = c1 \times R1 + d1 $$

$$ L2 = c2 \times R2 + d2 $$

Subsequently, the load ratio calculation unit 225 calculates a front axle load ratio x and a rear axle load ratio y, and calculates wheel load ratios $L_{FL}$, $L_{FR}$, $L_{RL}$, and $L_{RR}$ based on x and y (step S10). The front axle load ratio x is the ratio of the sum of the wheel loads of the two front wheels to the total weight M of the vehicle 1. The rear axle load ratio y is the ratio of the sum of the wheel loads of the two rear wheels to the total weight M of the vehicle 1. x and y are calculated using the following equations.

$$ x = 1/(1 + L1) $$

$$ y = 1 - x = L1/(1 + L1) $$

Also, the wheel load ratios $L_{FL}$, $L_{FR}$, $L_{RL}$, and $L_{RR}$ calculated here are indices that respectively represent relative wheel loads between the wheels FL, FR, RL, and RR. In the present embodiment, the wheel load ratios $L_{FL}$, $L_{FR}$, $L_{RL}$, and $L_{RR}$ are respectively defined as the ratios of the wheel loads of the wheels FL, FR, RL, and RR to the total weight M of the vehicle 1, and are calculated according to the following equations.

$$L_{FL} = x/(1 + L2)$$

$$L_{FR} = x - L_{FL}$$

$$L_{RL} = y/(1 + L2)$$

$$L_{RR} = y - L_{RL}$$

Subsequently, the wheel load calculation unit 226 calculates the wheel loads of the wheels FL, FR, RL, and RR according to the following equations, using the wheel load ratios $L_{FL}$, $L_{FR}$, $L_{RL}$, and $L_{RR}$ and the total weight M of the vehicle 1 (step S11).

$$FL\ wheel: M \times L_{FL}$$

$$FR\ wheel: M \times L_{FR}$$

$$RL\ wheel: M \times L_{RL}$$

$$RR\ wheel: M \times L_{RR}$$

Accordingly, the wheel load estimation processing ends. However, the wheel load estimation device 2 may further determine whether or not unbalanced loading has occurred, based on at least either the wheel load ratios calculated in step S10 or the wheel loads calculated in step S11. If it is determined that unbalanced loading has occurred, the wheel load estimation device 2 may be configured to generate a warning and output the warning via the warning indicator 3.

<3. Features>

According to the above embodiment, the first relationship specification information and the second relationship specification information stored in advance in the wheel load estimation device 2 are referenced according to the tire type information, and the wheel load is estimated using the first relationship specification information and the second relationship specification information suitable for the combination of the vehicle 1 and the tire. Therefore, the wheel load can be estimated more accurately as compared to the case of using general-purpose data acquired in test runs under conditions of combinations of multiple types of vehicles 1 and multiple types of tires, as the first relationship specification information and the second relationship specification information.

<4. Modifications>

Although one embodiment of the present invention has been described above, the present invention is not limited to the above embodiment, and various modifications can be made without departing from the gist of the present invention. For example, the following modifications are possible. In addition, the gist of the following modifications can be combined as appropriate.

(1) The configurations of the tag 8A and the reader 8B are not limited to those of the above embodiment. For example, the tag 8A may be configured to transmit the type information in accordance with other wireless communication standards such as Bluetooth (registered trademark). In this case, the reader 8B may be a mobile information terminal (smartphone, tablet, laptop computer, etc.) that is carried by the user and can be brought into the vehicle 1, or the wheel load estimation device 2 may also serve as the reader 8B.

(2) In the above embodiment, the wheel load ratio and the wheel load are calculated for each wheel, but these may be calculated only for some of the wheels FL, FR, RL, and RR. In addition, if only the wheel load ratio is required in another control system or the like of the vehicle 1, steps S4, S5, and S11 may be omitted.

(3) The order in which the steps of the wheel load estimation processing according to the above embodiment are executed can be changed as appropriate. For example, steps S4 and S5 may be executed before step S3.

(4) The method for calculating the front-rear load ratio L1 and the left-right load ratio L2 is not limited to the method of the above embodiment. For example, the front-rear load ratio L1 can be represented as a linear combination of the ratio between the integrated gain value of the two front wheels and the integrated gain value of the two rear wheels in a first frequency band and the ratio between the integrated gain value of the two front wheels and the integrated gain value of the two rear wheels in a second frequency band, each weighted by a predetermined coefficient. For details of this method, Japanese Laid-Open Patent Publication No. 2024-029666, which is a publication of an application filed by this applicant, may be referenced. When calculating the front-rear load ratio L1 using the method disclosed in this publication, the first relationship specification information corresponds to the weighting coefficients for the integrated gain value ratio in the first frequency band and the integrated gain value ratio in the second frequency band. Similarly, when calculating the left-right load ratio (first left-right load ratio L2 and second left-right load ratio L3) using the method disclosed in the same publication, the second relationship specification information corresponds to the weighting coefficients for the integrated gain value ratio in the first frequency band and the integrated gain value ratio in the second frequency band for the front left and right wheels and the weighting coefficients for the integrated gain value ratio in the first frequency band and the integrated gain value ratio in the second frequency band for the rear left and right wheels.

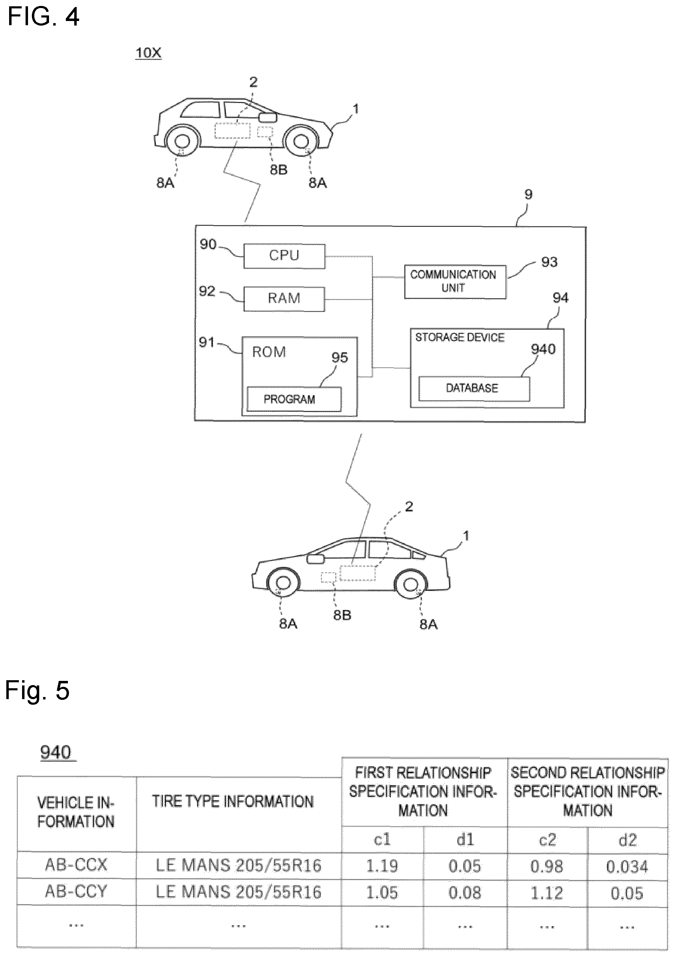

(5) In the above embodiment, the first relationship specification information and the second relationship specification information corresponding to the type information for multiple types of tires are stored in the storage device 25 of the wheel load estimation device 2. However, the first relationship specification information and the second relationship specification information may be stored not in the wheel load estimation device 2, but in a computer 9 to which the wheel load estimation device 2 is connected so as to enable data communication as shown in FIG. 4 and which is external to the vehicle 1. The computer 9 can be configured as a general-purpose server computer that is connected to wheel load estimation devices 2 in multiple vehicles 1 so as to enable data communication and transmits the first relationship specification information and the second relationship specification information in response to a request from each wheel load estimation device 2. The computer 9 constitutes a wheel load estimation system 10X according to a modification, together with the wheel load estimation device 2, at least one tire including the tag 8A, and the reader 8B. The computer 9 includes a CPU 90, a ROM 91, a RAM 92, a communication unit 93, and a nonvolatile rewritable storage device 94. A program 95 for controlling the operation of the computer 9 is stored in the ROM 91, and the computer 9 serves as a server computer by the CPU 90 reading out and executing the program 95. The RAM 92 and the storage device 94 are used as appropriate for the arithmetic operations of the CPU 90. The communication unit 93 is a communication device for performing data communication with other computers such as the wheel load estimation devices 2.

In the storage device 94, first relationship specification information and second relationship specification information are stored in association with multiple combinations of vehicle information and tire type information as shown in FIG. 5, for example. The vehicle information is information specifying the model of the vehicle in which the wheel load estimation device 2 is installed. That is, a database 940 of the first relationship specification information and the second relationship specification information corresponding to multiple combinations of vehicle 1 and tires is constructed in the storage device 94. The database 940 is preferably updatable.

If it is determined as NO in step S1 in the above embodiment (i.e., if all of the type information for the tires $T_{FL}$, $T_{FR}$, $T_{RL}$, and $T_{RR}$ has not been acquired), the tire information acquisition unit 220 of the wheel load estimation device 2 acquires at least one piece of the tire type information from each tag 8A in step S2, and transmits the vehicle information of the vehicle 1 in which the wheel load estimation device 2 is installed, to the computer 9 together with the acquired tire type information. Upon receiving the type information and the vehicle information from the wheel load estimation device 2, the computer 9 refers to the database 940, identifies the data of the first relationship specification information and the second relationship specification information that match the combination of the received type information and vehicle information, and transmits the data of the first relationship specification information and the second relationship specification information to the wheel load estimation device 2. Accordingly, the tire information acquisition unit 220 acquires the first relationship specification information and the second relationship specification information from the computer 9.

In the above embodiment, the device that communicates directly with the computer 9 may be a device other than the wheel load estimation device 2 that is connected to the wheel load estimation device 2 so as to enable data communication. For example, the reader 8B may acquire the tire type information from the tag 8A, transmit the type information to the computer 9 together with the vehicle information, and acquire the first relationship specification information and the second relationship specification information from the computer 9.

(6) The tire type information may be acquired by the wheel load estimation device 2, not from the tag 8A. For example, the tire information acquisition unit 220 may generate a screen for the user to input or select tire type information, display the screen on the warning indicator 3 or the like, and acquire tire type information based on an input or selection operation by the user. That is, each of the tires $T_{FL}$, $T_{FR}$, $T_{RL}$, and $T_{RR}$ does not have to include the tag 8A.

(7) The tire type information does not have to be acquired for all tires included in the vehicle 1, and may be acquired for at least one tire included in the vehicle 1. That is, it is assumed that the same type of tires is mounted on the vehicle 1.

**Claims**

1. A wheel load estimation device (2) configured to estimate a wheel load of a tire ($T_{FL}$, $T_{FR}$, $T_{RL}$, $T_{RR}$) included in a vehicle (1), the wheel load estimation device (2) comprising:

a tire information acquisition unit (220) configured to acquire type information specifying a type of the tire ($T_{FL}$, $T_{FR}$, $T_{RL}$, $T_{RR}$);

a wheel speed acquisition unit (221) configured to acquire wheel speed information representing a wheel speed (V1, V2, V3, V4) of each wheel (FL, FR, RL, RR) of the vehicle (1);

a frequency characteristic ratio calculation unit (224) configured to calculate a front-rear frequency characteristic ratio (R1) and a left-right frequency characteristic ratio (R2), based on the wheel speed information, the front-rear frequency characteristic ratio (R1) changing in accordance with a change in a front-rear load ratio (L1) which is a ratio between a load applied to a front wheel (FL, FR) of the vehicle (1) and a load applied to a rear wheel (RL, RR) of the vehicle (1), the left-right frequency characteristic ratio (R2) changing in accordance with a change in a left-right load ratio (L2, L3) which is a ratio between a load applied to a left wheel (FL, RL) of the vehicle (1) and a load applied to a right wheel (FR, RR) of the vehicle (1);

a load ratio calculation unit (225) configured to calculate the front-rear load ratio (L1) and the left-right load ratio (L2, L3), based on the front-rear frequency characteristic ratio (R1) and the left-right frequency characteristic ratio (R2), respectively; and

a wheel load calculation unit (226) configured to calculate a wheel load ratio ($L_{FL}$, $L_{FR}$, $L_{RL}$, $L_{RR}$) representing a relative wheel load between the wheels (FL, FR, RL, RR) included in the vehicle (1), with respect to at least one wheel (FL, FR, RL, RR) of the vehicle (1), based on the front-rear load ratio (L1) and the left-right load ratio (L2, L3), wherein

the load ratio calculation unit (225) calculates the front-rear load ratio (L1) and the left-right load ratio (L2, L3), based on first relationship specification information specifying a relationship between the front-rear frequency characteristic ratio (R1) and the front-rear load ratio (L1) and second relationship specification information specifying a relationship between the left-right frequency characteristic ratio (R2) and the left-right load ratio (L2, L3), respectively, and

the first relationship specification information and the second relationship specification information are determined according to the type of the tire ($T_{FL}$, $T_{FR}$, $T_{RL}$, $T_{RR}$).

2. The wheel load estimation device (2) according to claim 1, wherein at least one of the tires ($T_{FL}$, $T_{FR}$, $T_{RL}$, $T_{RR}$) includes a tag (8) in which the type information is electromagnetically stored.

3. The wheel load estimation device (2) according to claim 1 or 2, wherein

the first relationship specification information and the second relationship specification information are stored in a computer (9) external to the vehicle (1), and

the load ratio calculation unit (225) acquires the first relationship specification information and the second relationship specification information from the external computer (9).

4. A wheel load estimation system (10X) comprising:

the wheel load estimation device (2) according to claim 1;

at least one tire ($T_{FL}$, $T_{FR}$, $T_{RL}$, $T_{RR}$) including a tag (8) in which the type information is electromagnetically stored; and

a reader (8B) configured to read out the type information from the tag (8).

5. A wheel load estimation method, executed by one or more computers (2), for estimating a wheel load of a tire ($T_{FL}$, $T_{FR}$, $T_{RL}$, $T_{RR}$) included in a vehicle (1), the wheel load estimation method comprising:

acquiring type information specifying a type of the tire ($T_{FL}$, $T_{FR}$, $T_{RL}$, $T_{RR}$);

acquiring wheel speed information representing a wheel speed (V1, V2, V3, V4) of each wheel (FL, FR, RL, RR) of the vehicle (1);

calculating a front-rear frequency characteristic ratio (R1) and a left-right frequency characteristic ratio (R2), based on the wheel speed information, the front-rear frequency characteristic ratio (R1) changing in accordance with a change in a front-rear load ratio (L1) which is a ratio between a load applied to a front wheel (FL, FR) of the vehicle (1) and a load applied to a rear wheel (RL, RR) of the vehicle (1), the left-right frequency characteristic ratio (R2) changing in accordance with a change in a left-right load ratio (L2, L3) which is a ratio between a load applied to a left wheel (FL, RL) of the vehicle (1) and a load applied to a right wheel (FR, RR) of the vehicle (1);

calculating the front-rear load ratio (L1) and the left-right load ratio (L2, L3), based on the front-rear frequency characteristic ratio (R1) and the left-right frequency characteristic ratio (R2), respectively; and

calculating a wheel load ratio ($L_{FL}$, $L_{FR}$, $L_{RL}$, $L_{RR}$) representing a relative wheel load between the wheels (FL, FR, RL, RR) included in the vehicle (1), with respect to at least one wheel (FL, FR, RL, RR) of the vehicle (1), based on the front-rear load ratio (L1) and the left-right load ratio (L2, L3), wherein the calculating the front-rear load ratio (L1) and the left-right load ratio (L2, L3) includes calculating the front-rear load ratio (L1) and the left-right load ratio (L2, L3), based on first relationship specification information specifying a relationship between the front-rear frequency characteristic ratio (R1) and the front-rear load ratio (L1) and second relationship specification information specifying a relationship between the left-right frequency characteristic ratio (R2) and the left-right load ratio (L2, L3), respectively, and the first relationship specification information and the second relationship specification information are determined according to the type of the tire ($T_{FL}$, $T_{FR}$, $T_{RL}$, $T_{RR}$).

load ratio (L2, L3), based on first relationship specification information specifying a relationship between the front-rear frequency characteristic ratio (R1) and the front-rear load ratio (L1) and second relationship specification information specifying a relationship between the left-right frequency characteristic ratio (R2) and the left-right load ratio (L2, L3), respectively, and the first relationship specification information and the second relationship specification information are determined according to the type of the tire ($T_{FL}$, $T_{FR}$, $T_{RL}$, $T_{RR}$).

6. A wheel load estimation program for estimating a wheel load of a tire ($T_{FL}$, $T_{FR}$, $T_{RL}$, $T_{RR}$) included in a vehicle (1), the wheel load estimation program causing one or more computers (2) to execute:

acquiring type information specifying a type of the tire ($T_{FL}$, $T_{FR}$, $T_{RL}$, $T_{RR}$);
acquiring wheel speed information representing a wheel speed (V1, V2, V3, V4) of each wheel (FL, FR, RL, RR) of the vehicle (1);
calculating a front-rear frequency characteristic ratio (R1) and a left-right frequency characteristic ratio (R2), based on the wheel speed information, the front-rear frequency characteristic ratio (R1) changing in accordance with a change in a front-rear load ratio (L1) which is a ratio between a load applied to a front wheel (FL, FR) of the vehicle (1) and a load applied to a rear wheel (RL, RR) of the vehicle (1), the left-right frequency characteristic ratio (R2) changing in accordance with a change in a left-right load ratio (L2, L3) which is a ratio between a load applied to a left wheel (FL, RL) of the vehicle (1) and a load applied to a right wheel (FR, RR) of the vehicle (1);
calculating the front-rear load ratio (L1) and the left-right load ratio (L2, L3), based on the front-rear frequency characteristic ratio (R1) and the left-right frequency characteristic ratio (R2), respectively; and
calculating a wheel load ratio ($L_{FL}$, $L_{FR}$, $L_{RL}$, $L_{RR}$) representing a relative wheel load between the wheels (FL, FR, RL, RR) included in the vehicle (1), with respect to at least one wheel (FL, FR, RL, RR) of the vehicle (1), based on the front-rear load ratio (L1) and the left-right load ratio (L2, L3), wherein
the calculating the front-rear load ratio (L1) and the left-right load ratio (L2, L3) includes calculating the front-rear load ratio (L1) and the left-right

FIG. 1

FIG. 2

FIG. 3

START

S1 — HAS TYPE INFORMATION FOR TIRE BEEN STORED?

YES

NO

S2 — ACQUIRE TYPE INFORMATION

S3 — ACQUIRE WHEEL SPEED INFORMATION FROM WHEEL SPEED SENSORS AND CONVERT WHEEL SPEED INFORMATION INTO WHEEL SPEEDS V1 TO V4

S4 — ACQUIRE OUTPUT SIGNAL OF WT

S5 — CALCULATE TOTAL WEIGHT OF VEHICLE

S6 — DERIVE FREQUENCY SPECTRA OF V1 TO V4

S7 — CALCULATE INTEGRATED GAIN VALUES

S8 — CALCULATE FRONT-REAR FREQUENCY CHARACTERISTIC RATIO R1 AND LEFT-RIGHT FREQUENCY CHARACTERISTIC RATIO R2

S9 — CALCULATR FRONT-REAR LOAD RATIOS L1 AND LEFT-RIGHT LOAD RATIO R2

S10 — CALCULATE WHEEL LOAD RATIOS OF FOUR WHEELS

S11 — CALCULATE WHEEL LOADS OF FOUR WHEELS

END

## FIG. 4

## Fig. 5

| VEHICLE IN-FORMATION | TIRE TYPE INFORMATION | FIRST RELATIONSHIP SPECIFICATION INFOR-MATION | | SECOND RELATIONSHIP SPECIFICATION INFOR-MATION | |
|---|---|---|---|---|---|
| | | c1 | d1 | c2 | d2 |
| AB-CCX | LE MANS 205/55R16 | 1.19 | 0.05 | 0.98 | 0.034 |
| AB-CCY | LE MANS 205/55R16 | 1.05 | 0.08 | 1.12 | 0.05 |
| ... | ... | ... | ... | ... | ... |

Europäisches
Patentamt

European
Patent Office

Office européen
des brevets

# EUROPEAN SEARCH REPORT

**Application Number**

EP 25 16 6271

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 331 930 A1 (SUMITOMO RUBBER IND [JP]) 6 March 2024 (2024-03-06) * paragraph [0015] - paragraph [0051]; figures 1-9D * | 1-6 | INV. B60W40/13 G01G19/08 |
| A | JP 2017 146277 A (SHOWA CORP) 24 August 2017 (2017-08-24) * the whole document * | 1-6 | |
| A | DE 10 2016 200778 A1 (CONTINENTAL TEVES AG & CO OHG [DE]) 27 July 2017 (2017-07-27) * the whole document * | 1-6 | |
| A | US 2017/355234 A1 (DHARAMSHI PARTHIV [DE] ET AL) 14 December 2017 (2017-12-14) * paragraph [0079] - paragraph [0113]; claim 1; figures 1-4 * | 1 | |

**TECHNICAL FIELDS SEARCHED (IPC)**

B60W
G01G
B60C

The present search report has been drawn up for all claims

| Place of search | Date of completion of the search | Examiner |
|---|---|---|
| Munich | 27 August 2025 | Billen, Karl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 6271

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2025

| Patent document cited in search report | | Publication date | Patent family member(s) | | Publication date |
|---|---|---|---|---|---|
| EP 4331930 | A1 | 06-03-2024 | EP | 4331930 A1 | 06-03-2024 |
| | | | JP | 2024029666 A | 06-03-2024 |
| | | | US | 2024060814 A1 | 22-02-2024 |
| JP 2017146277 | A | 24-08-2017 | NONE | | |
| DE 102016200778 | A1 | 27-07-2017 | NONE | | |
| US 2017355234 | A1 | 14-12-2017 | CN | 107000504 A | 01-08-2017 |
| | | | EP | 3237239 A1 | 01-11-2017 |
| | | | GB | 2533658 A | 29-06-2016 |
| | | | US | 2017355234 A1 | 14-12-2017 |
| | | | WO | 2016102379 A1 | 30-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019113373 A
- JP 5346659 B
- JP 4926258 B
- JP 2024029666 A